# EUROPÄISCHE PATENTSCHRIFT

(11) **EP 1 272 434 B1**
(45) Veröffentlichungstag und Bekanntmachung des Hinweises auf die Patenterteilung: **19.10.2005**
(21) Anmeldenummer: 01927785.4
(22) Anmeldetag: 23.03.2001
(51) Int. Cl.: C02F 9/00, B01D 65/08, C02F 1/44

(54) **VERFAHREN UND VORRICHTUNG ZUM ERZEUGEN VON REINSTWASSER**
METHOD AND DEVICE FOR PRODUCING ULTRAPURE WATER
PROCEDE ET DISPOSITIF PERMETTANT DE PRODUIRE DE L'EAU PURE

(30) Priorität: 29.03.2000 DE 10015453
(43) Veröffentlichungstag der Anmeldung: 08.01.2003
(73) Patentinhaber: STEAG encotec GmbH, 45128 Essen (DE)
(72) Erfinder: KEIL, Ulrich, 47807 Krefeld (DE); KÖRNER, Herbert, 49835 Lohne (DE)
(74) Vertreter: Zenz, Joachim Klaus
(86) Internationale Anmeldenummer: PCT/EP2001/003320
(87) Internationale Veröffentlichungsnummer: WO 2001/072645

(56) Entgegenhaltungen:
- WO-A-00/48943
- WO-A-97/03926
- WO-A-98/25858
- US-A- 3 490 590
- US-A- 5 135 654
- US-A- 5 651 894
- PATENT ABSTRACTS OF JAPAN vol. 003, no. 091 (C-054), 3. August 1979 (1979-08-03) & JP 54 069578 A (NITTO ELECTRIC IND CO LTD), 4. Juni 1979 (1979-06-04) -& DATABASE WPI Week 197928 Derwent Publications Ltd., London, GB; AN 1979-51825B XP002175355, 4. Juni 1979 (1979-06-04)
- PATENT ABSTRACTS OF JAPAN vol. 017, no. 285 (C-1066), 2. Juni 1993 (1993-06-02) & JP 05 015744 A (HITACHI PLANT ENG & CONSTR CO LTD), 26. Januar 1993 (1993-01-26) -& DATABASE WPI Week 199309 Derwent Publications Ltd., London, GB; AN 1993-070305 XP002175356, 26. Januar 1993 (1993-01-26)
- PATENT ABSTRACTS OF JAPAN vol. 015, no. 068 (C-0807), 18. Februar 1991 (1991-02-18) -& JP 02 293098 A (EBARA INFILCO CO LTD;OTHERS: 02), 4. Dezember 1990 (1990-12-04) -& DATABASE WPI Week 199103, 4. Dezember 1991 (1991-12-04) Derwent Publications Ltd., London, GB; AN 1991-019528 XP002175232
- PATENT ABSTRACTS OF JAPAN vol. 015, no. 373 (C-0869), 19. September 1991 (1991-09-19) -& JP 03 151100 A (EBARA INFILCO CO LTD;OTHERS: 01), 27. Juni 1991 (1991-06-27) -& DATABASE WPI Week 199132, 27. Juni 1991 (1991-06-27) Derwent Publications Ltd., London, GB; AN 1991-233697 XP002175233
- FLEMMING H-C ET AL: "Biofouling -- the Achilles heel of membrane processes" DESALINATION, ELSEVIER SCIENTIFIC PUBLISHING CO, AMSTERDAM, NL, Bd. 113, Nr. 2-3, 30. November 1997 (1997-11-30), Seiten 215-225, XP004099910 ISSN: 0011-9164

## Beschreibung

Die Erfindung betrifft ein Verfahren sowie eine Vorrichtung zum Erzeugen von Reinstwasser aus Rohwasser, das mit biologisch entfernbaren Substanzen, insbesondere mit gelösten organischen Kohlenwasserstoffverbindungen belastet ist.

WO 97/03926 A offenbart ein Verfahren zur Erzeugung von Trinkwasser aus z.B. Meerwasser. Dabei wird das Rohwasser über einen Sandfilter geführt und anschliessend in einer Umkehrosmosestufe behandelt. Um der Verkeimung der Membran vorzubeugen, werden dem Wasser, auch vor dem Sandfilter, oxidierende Zusätze wie Chlorionen oder Ozon und Kupferionen zugesetzt.

Der Erfindung liegt die Aufgabe zugrunde, die Erzeugung von Reinstwasser mit beliebig hohem Reinheitsgrad in besonders wirtschaftlicher Weise zu ermöglichen.

Zur Lösung dieser Aufgabe wird das Wasser erfindungsgemäß durch
- eine Bioreaktionsstufe,
- eine nachfolgende, nicht-oxidierende biostatische Konditionierungsstufe
- und schließlich durch eine Membranfiltrationsstufe geleitet.

Unter Rohwasser wird hier Oberflächenwasser verstanden, also Wasser aus Seen, Flüssen und Stauseen sowie auch Meerwasser. Eine Erzeugung von Reinstwasser aus Abwasser ist auf direktem Wege normalerweise nicht wirtschaftlich.

Die erste Stufe des erfindungsgemäßen Verfahrens, nämlich die Bioreaktionsstufe, dient dazu, den im Rohwasser enthaltenen bioverfügbaren TOC (Total Organic Carbon) zu reduzieren. Der TOC bildet ein Substrat für im Rohwasser enthaltene Mikroorganismen. Die Bioreaktionsstufe wird in einem Bioreaktor durchgeführt. Dabei wird auf einem Biozönose-Trägersystem, bestehend beispielsweise aus einem Tropfkörper oder einem Tauchtropfkörper oder aber aus einem anderen Festbettsystem, etwa einem Mehrschichtfilter o. dgl., ein Biorasen aufgebaut, in dem die stoffliche Umsetzung des bioverfügbaren TOC in belebte Materie (Biomasse) erfolgt.

Dem Bioreaktor wird vorzugsweise ein Oberflächenwasser zugeführt, aus dem ein Teil des TOC sowie mindestens ein Teil sonstiger Verunreinigungen entfernt worden sind. Die Funktion des Bioreaktors beschränkt sich also vor allem auf die Umsetzung der nur noch relativ geringen Menge an gelöst oder dispers vorliegendem, bioverfügbaren TOC.

Der auf dem Trägermaterial aufwachsenden Biozönose steht wegen der geringen Menge an bioverfügbarem TOC des zufließenden Rohwassers nur ein minimales Substratangebot zur Verfügung. Daraus resultieren relativ schwache Stoffwechselprozesse der Mikroorganismen. Es rechtfertigt sich, die Bioreaktionsstufe als Biosorptionsstufe zu bezeichnen.

Je nach zur Verfügung stehendem Rohwasser ist es vorteilhaft, der Bioreaktionsstufe eine Vorreinigung, z.B. eine Flockungsstufe vorzuschalten, um die TOC-Fracht zu reduzieren.

Die Auslegungs- und Betriebsparameter der Bioreaktionsstufe werden abgestimmt auf den zu erwartenden biologischen Anteil der TOC-Fracht, den Stoffumsatz und die Alterung des Biorasens.

Von wesentlicher Bedeutung für das erfindungsgemäße Verfahren ist das Verkeimungspotential stromab der Bioreaktionsstufe, da hiervon die Standzeit der Membranfilteranlage, das heißt, der Zeitabstand zwischen den Reinigungszyklen abhängt. Wie jeder biologische Prozeß, arbeitet die Bioreaktionsstufe mit einem Wirkungsgrad. Lediglich ein gewisser, wenn auch hoher Anteil von 80 bis 90 % des biologisch abbaubaren TOC kann zu-arteigener Biomasse verstoffwechselt werden. Auch ist es unvermeidbar, daß ein geringer Restteil der erzeugten Biomasse mit dem gereinigten Wasser aus der Bioreaktionsstufe ausgetragen wird.

Erfindungsgemäß wird das stromab der substratzehrenden Biozönose der Bioreaktionsstufe herrschende Restverkeimungspotential dem zweiten Verfahrensschritt unterworfen, nämlich der nicht-oxidierenden biostatisch wirkenden Konditionierungsstufe. In dieser Stufe wird dem Wasser ein biostatisch wirkendes Mittel zugegeben, um auf den Stoffwechsel der Mikroorganismen einzuwirken. Die Konzentration des Biostatikum wird vorzugsweise so gewählt, daß lediglich eine ausreichende Hemmung des Stoffwechsels der Mikroorganismen erfolgt, so daß diese daran gehindert werden, das Rest-Substrat, nämlich den TOC-Schlupf des Bioreaktors zu verstoffwechseln. Das Verkeimungspotential geht gegen Null, wodurch die Gefahr eines Biofouling in der Membranfilteranlage, insbesondere auf der Anströmfläche der Membran, gebannt ist. Unter Biofouling versteht man die Verkeimung der Membran mit anschließender Schleimbildung. Der Schleim altert und verfestigt sich dabei, so daß eine zeit- und chemikalienaufwendige Abreinigung erforderlich wird. Der Zeitabstand zwischen den Reinigungszyklen der Membran wird maßgeblich durch das Biofouling bestimmt und wirkt sich direkt auf den Wirkungsgrad des Reinigungsprozesses der Membran aus.

Die sehr geringe Menge an Biostatikum, die erforderlich ist, um die Biozönose stromab der Bioreaktionsstufe weitgehend in endogene Atmung bis hin zur Autoxidation übergehen zu lassen, spielt für die Entsorgung des Konzentrats der Membranstufe eine Rolle, sofern es sich bei den biostatisch wirkenden Mitteln um umweltbelastende Stoffe handelt, wie es häufig der Fall ist. Eine keimtötende Wirkung ist nicht erforderlich und wird auch nicht angestrebt, sondern lediglich eine Versetzung der Biozönose in einen für die Mikroorganismen lebensgefährlichen Zustand, und zwar durch Einwirkung auf das Enzymsystem der Mikroorganismen, um die gewünschte Stoffwechselhemmung zu erzeugen. Vor allen Dingen handelt es sich bei den biostatisch wirkenden Mitteln um solche, die keine Gefährdung des Membranfilters mit sich bringen. Es kommt zu einer Aufkonzentration des ionalen Biostatikum auf der angeströmten Membranfläche, und zwar in der Größenordnung des Zwanzigfachen. Auch auf der Membran, auf der grundsätzlich optimale Bedingungen für die Biozönose herrschen würden, wird also ein wesentliches Wachstum der Mikroorganismen sowie deren Zellteilung und Schleimbildung wirksam verhindert.

Da das Biostatikum vorzugsweise direkt stromab der Bioreaktionsstufe zugegeben wird, schützt es die gesamte nachgeschaltete Membranfilteranlage über Rohrleitungen, Pumpen, ggf. zusätzliche Filter bis hin zur eigentlichen Membran vor einer mit Biofouling einhergehenden Verkeimung.

Als Bemessungskriterium für die Menge des Biostatikum dient vorzugsweise die analytisch ermittelte Keimzahl im Konzentrat der Membranstufe.

Es sei nochmals hervorgehoben, daß das Biostatikum lediglich in einer solchen Menge eingesetzt wird, daß es toxisch-stoffwechselhemmend, nicht aber toxisch-tödlich wirkt. Hierin liegt ein grundsätzlicher Unterschied zur Wirkung bekannter Biozide, beispielsweise Chlor oder Wasserstoffperoxid. Biozide, die der Entkeimung dienen, wirken oxidativ-zerstörend, also keimtötend, wobei die Mikroorganismen aufgespalten werden und dadurch ihrerseits Substrat für diejenigen Mikroorganismen bilden, die dem Angriff des eingesetzten Biozids standgehalten haben. Eine zuverlässige Abtötung der unterschiedlichen Mikroorganismenstämme läßt sich selbst mit hohen Konzentrationen an Biozid nicht erzielen. Im übrigen greifen Biozide, wenn sie in der für eine weitgehende Entkeimung erforderlichen Konzentration eingesetzt werden, zumindest langfristig die Membranfilter an.

Der durch das Biostatikum erzielbare Effekt ließe sich mit einer Entkeimung unter Zugabe von Chlor oder Natriumbisulfit nicht erreichen. Da die nachgeschaltete Endbehandlungsstufe gegen Chlorung empfindlich ist, müßte der Chlorüberschuß stromab der Chlorungsstufe wieder aus dem Wasser entfernt werden.

Der Erfindung liegt die Erkenntnis zugrunde, daß durch eine Entchlorung des Wassers eine sogenannte Entkeimungslücke stromab der Entchlorungsstufe entstehen würde, die ein sprunghaftes mikrobiologisches Wachstum zur Folge hätte.

Chlor als oxidierendes Entkeimungsmittel hat - wie erwähnt - die Wirkung, die Zellstruktur der Mikroorganismen chemisch oxidativ aufzuspalten. Die oxidativ zerstörte Biomasse würde wiederum in der folgenden Entkeimungslücke als Substrat biologischer Stoffwechselvorgänge dienen.

Das erfindungsgemäß eingesetzte Biostatikum hingegen wirkt nicht oxidierend-zerstörend und folglich auch nicht substraterzeugend. Auch greift es, wie erwähnt, die Membran nicht an, sondern kann sich dort gefährdungsfrei aufkonzentrieren.

Von wesentlicher Bedeutung ist also, daß der Membranfiltration erfindungsgemäß zwei Behandlungsstufen vorgeschaltet werden, deren synergistischer Effekt darin besteht, ein Biofouling im Membranfiltersystem, insbesondere auf dem Membranfilter zu verhindern und dadurch dessen Standzeit zwischen den Reinigungszyklen zu verlängern.

In der Bioreaktionsstufe wird - wie erwähnt - eine aktive Biozönose aufgebaut, das heißt, ein Milieu, in dem sich unterschiedliche Bakterienarten aufhalten. Hier erfolgt eine Elimination von 80 bis 90 % des im Rohwasser enthaltenen biologisch abbaubaren TOC. Dem auf diese Weise substratgezehrten Wasser wird im nächsten Behandlungsschritt, nämlich in der biostatischen Konditionierungsstufe, ein nicht-oxidierendes Biostatikum zugegeben, welches weiteren mikrobiellen Stoffwechsel hemmt.

Die nach der Bioreaktionsstufe noch im Wasser befindlichen Bakterien werden zwei Streßbedingungen ausgesetzt, die zu der verfahrenstechnisch beabsichtigten biologischen Wachstumshemmung führen:
- Substratmangel, d.h. Mangel an bioverfügbarem TOC,
- Zudosierung eines Biostatikum, durch dessen toxischen Effekt die bereits durch den Substratmangel erzielte Stoffwechselhemmung erheblich verstärkt wird.

Ein Biofouling in Form von schleimigen Ablagerungen in der nachgeschalteten Membranstufe kann damit unterbunden werden. Ohne Einwirkung eines Biostatikum im ablaufenden Wasser der Bioreaktionsstufe würden Restkonzentrationen an assimilierbarem TOC die Wirkung der Bioreaktionsstufe durch anschließendes Biowachstum (Biofouling) in der Membranfiltrationsstufe in gewissem Umfang wieder kompensieren.

Durch die Hintereinanderschaltung der beiden Stufen, nämlich der Bioreaktionsstufe und der biostatischen Konditionierungsstufe, kann durch die synergetische Wirkung von substratgezehrtem Rohwasser und biostatischer Stoffwechselhemmung ein Wirkungsgrad beim Abbau von assimilierbarem TOC von 80 bis 90 % und somit eine entscheidende Unterbindung des Biofilmbildungspotentials in der Reinstwassererzeugungsanlage erreicht werden.

Insbesondere biologisch verfügbares TOC in gelöster oder kolloidaler Form wird an der einlaßseitigen Membranfläche abgetrennt und könnte, sofern assimilierbar - oder gar, vorher durch Chlor oxidativ aufgespalten, besonders leicht assimilierbar - mikrobiell durch Stoffwechsel zu arteigener Biomasse umgesetzt werden.

Diese Gefahr wird durch die toxische Wirkung des Biostatikum gebannt. Die Zeitspanne zwischen den Reinigungszyklen der Membran-Filteranlage wird aufgrund der Unterbindung schleimbildender bakterieller Massen erheblich verlängert. Dies erhöht die Wirtschaftlichkeit des Prozesses, da eine Reinigung der Membran-Filteranlage mit einem Produktionsausfall verbunden ist und/oder den Einsatz extrem teurer Chemikalien erforderlich macht. Das erfindungsgemäße Verfahren, eingesetzt an einer Großanlage, hat bereits eine ununterbrochene Laufzeit von vier Monaten ermöglicht; die Entwicklung der maßgebenden Betriebsparameter lassen eine Laufzeitprognose von wesentlich mehr als sechs Monaten erwarten.

Bei der Membran-Filtration bestimmt die Durchlässigkeit der Membran den Reinheitsgrad der Stofftrennung. Möglich ist die Erzeugung sogar von Ultra-Reinstwasser, wie man es beispielsweise in der pharmazeutischen Industrie benötigt, wobei die Membranfiltrationsstufe vorzugsweise als Umkehrosmosestufe arbeitet. Hauptanwendungsgebiet der Erfindung ist allerdings die Erzeugung von Trinkwasser sowie von Speisewasser für Kesselanlagen, vor allen Dingen für Kraftwerke.

Unter Biostatikum ist ein anorganisches Element (atomar, ional vorliegend) oder eine anorganische Verbindung zu verstehen, wobei die Wirkung bei letaler Konzentration toxisch-tödlich sein kann. Erfindungsgemäß jedoch wird die Konzentration so niedrig gehalten, daß die Wirkung lediglich toxisch-stoffwechselhemmend ist. Biostatika wirken auf das mikrobielle Enzymsystem. Sie sind, im Gegensatz zu Bioziden, nicht oxidativ-zerstörend.

In wesentlicher Weiterbildung der Erfindung wird vorgeschlagen, dem Wasser in der biostatischen Konditionierungsstufe als toxisch wirkende Anorganika Schwermetallverbindungen, vorzugsweise Kupfersulfat, Kupferchlorid, Zinksulfat und/oder Zinkchlorid zuzugeben. Es wurde gefunden, daß durch Zudosierung schwermetallhaltiger Salzlösungen bereits in sehr geringen Konzentrationen ein Biowachstum bei Vorhandensein von assimilierbarem TOC verhindert werden kann. Überraschenderweise hat es sich gezeigt, daß der gemeinsame Einsatz von Kupfer- und Zinksalzen einen Synergieeffekt dergestalt ergibt, daß sich bei vorgegebenem Verkeimungspotential eine vorgegebene soffwechselhemmende Wirkung mit geringerer Konzentration erzielen läßt, als sie erforderlich ist, wenn nur eines der Salze allein eingesetzt wird. Offenbar wird ein breiteres toxisches Spektrum abgedeckt.

Die Tatsache, daß erfindungsgemäß nur sehr geringe Konzentrationen an Biostatikum erforderlich sind, und zwar auch dann, wenn lediglich eine einzige Schwermetallverbindung eingesetzt wird, wirkt sich, wie erwähnt, auch aus Gründen des Umweltschutzes positiv aus. Schwermetallverbindungen dürfen nur in geringen Konzentrationen ohne Auflagen entsorgt werden. Die geltenden Grenzwerte werden mit dem erfindungsgemäßen Verfahren nicht nur eingehalten, sondern sogar deutlich unterschritten. Auch dies trägt zur Wirtschaftlichkeit des Reinigungsprozesses bei, da das Konzentrat der Membranstufe ohne Sondermaßnahmen entsorgt werden kann.

Vorteilhafterweise erfaßt man den Verkeimungsgrad, nämlich den biologischen Stoffumsatz zwischen der biostatischen Konditionierungs- und der Endbehandlungsstufe und stellt in Abhängigkeit hiervon die biostatische Konditionierungsstufe ein. Damit läßt sich einerseits eine zu geringe und andererseits eine Überschuß-Zudosierung des Biostatikum verhindern.

Die Erfassung des Verkeimungsgrades kann über eine ATP-Messung erfolgen (Messung des Adrenosin-Tri-Phosphat als Energiespeicher in lebenden Zellen mittels leuchtfähiger Organismen als Reagenz). Auch besteht die Möglichkeit, über einen Biofilm-Monitor mit transparenten oder nicht-transparenten Elementen den Biomasse-Bewuchs zu erfassen.

Ferner kann es vorteilhaft sein, in der Bioreaktionsstufe eine Filtration durchzuführen, um eine mechanische Abscheidung ungelöster Feinstoff-Fraktionen zu bewirken. Dies kann von besonderer Bedeutung sein, wenn, wie es ferner vorgeschlagen wird, das Wasser vor der Bioreaktionsstufe durch eine Flockungs- und Sedimentationsstufe geführt wird, in der die Gefahr eines Flockenabtriebs besteht. In die Flockungsstufe kann der aus der Bioreaktionsstufe rückgespülte Belebtschlamm eingeleitet werden.

Wie bereits erwähnt, erweist es sich unter Umständen als vorteilhaft, der Bioreaktionsstufe eine Behandlungsstufe, z.B. eine Flockungsstufe vorzuschalten, die zu einer Reduzierung des nicht-bioverfügbaren TOC führt. Dies schwächt die Stoffwechselprozesse der auf dem Trägermaterial des Bioreaktors aufwachsenden Biozönose.

Grundsätzlich ist die Membran-Filtration als Endbehandlungsstufe in der Lage, den gewünschten Reinheitsgrad einzustellen, wobei sämtliche nicht permeierenden Substanzen auf der Eintrittsfläche der Membran zurückgehalten werden. Die abgetrennten Stoffe bestehen aus anorganischem und organischem Material. Die toxische Wirkung des Biostatikum verhindert, daß Teilmengen des assimilierbaren organischen Materials (AOC) durch Stoffwechsel zu schleimbildender Biomasse verändert werden. Die Gefahr einer Membranverblockung durch schleimbildende Bakterien ist damit weitgehend unterbunden.

Es kann vorteilhaft sein, das Wasser nach der Bioreaktionsstufe durch eine Adsorptionsstufe zu führen.

Die Erfindung schafft ferner eine Vorrichtung zum Durchführen des vorstehend erläuterten Verfahrens, nämlich zum Erzeugen von Reinstwasser aus Rohwasser, das mit biologisch entfernbaren Substanzen, insbesondere mit gelösten organischen Kohlenwasserstoffverbindungen belastet ist, wobei diese Vorrichtung folgende Merkmale aufweist:
- einen Bioreaktor, insbesondere ein Mehrschichtfilter, das durch Rückspülung reinigbar ist,
- eine dem Bioreaktor nachgeschaltete Dosiereinrichtung zum Eindosieren eines Biostatikum in das Wasser und
- eine der Dosiereinrichtung nachgeschaltete Membran-Filteranlage, vorzugsweise eine Umkehrosmose-Anlage.

Der Bioreaktor kann unter Umständen fremdbelüftet sein.

Grundsätzlich können im Bioreaktor die verschiedensten Trägermaterialien, wie Kies, Aktivkohle oder Kunststoffpellets mit spezifisch großer Oberfläche für den Biosorptionsprozeß eingesetzt werden. Besonders bewährt allerdings hat sich das Mehrschichtfilter, und zwar hinsichtlich seiner einfachen Rückspülbarkeit und seiner mechanischen Stabilität, verbunden mit günstigen Erstellungskosten.

Ein nachgeschalteter Adsorber kann zur Optimierung des Reinigungsprozesses beitragen. Der zusätzliche Aufwand rechtdertigt sich allerdings nur in speziellen Fällen, z.B. bei der Erzeugung von Ultra-Reinstwasser.

Zur Erfassung des Verkeimungsgrades stromauf der Membran-Filteranlage kann ein Meßsystem, insbesondere eine Keimzahl-Meßeinrichtung vorgesehen sein. Auch kann ein optischer Biofilm-Monitor mit einem Referenzelement verwendet werden, mit dem sich die Anlagerung schleimbildender Bakterien nachweisen läßt.

Vorteilhafte Weiterbildungen der Erfindung ergeben sich aus den Unteransprüchen.

Die Erfindung wird im folgenden anhand eines bevorzugten Ausführungsbeispiels im Zusammenhang mit der beiliegenden Zeichnung näher erläutert. Die Zeichnung zeigt in:

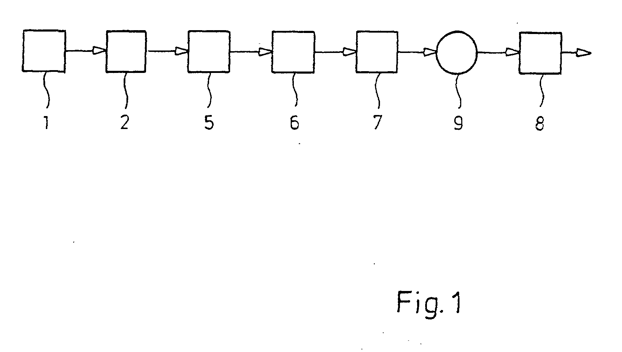

Figur 1 ein Fließschema einer erfindungsgemäßen Vorrichtung.

Nach Figur 1 ist eine Flockungs- und Sedimentationseinrichtung 1 vorgesehen, die mit verunreinigtem Oberflächenwasser beschickt wird. Das hier vorgereinigte Wasser gelangt in ein Mehrschichtfilter 2, das als Bioreaktor arbeitet. Im Filterbett des Mehrschichtfilters 2 baut sich ein Biorasen auf. Der assimilierbare Anteil des TOC wird biologisch weitgehend zu arteigener Biomasse umgesetzt. Im übrigen erfüllt das Mehrschichtfilter 2 seine Filterfunktion, d.h. es scheidet ungelöste Feinstoff-Fraktionen ab.

Das Mehrschichtfilter 2 wird periodisch durch Rückspülung mit Luft und Wasser gereinigt. Die Zykluszeit wird auf der Basis einer Keimzahlmessung und ggf. der analytisch zu bestimmenden AOC-Fracht (AOC steht für Assimilierbarer Organischer Carbon) des abfließenden Wassers festgelegt. Die Keimzahl und die AOC-Fracht werden labormäßig erfaßt.

Stromab des Mehrschichtfilters 2 ist ein Adsorber 5 vorgesehen. Der Adsorber 5 arbeitet mit Aktivkohle und wird ebenfalls mit Luft und Wasser rückgespült. Hier ist, wie auch für das Mehrschichtfilter 2, eine durchsatzabhängige Zeitsteuerung möglich sowie auch eine Festlegung, die in Abhängigkeit von einer Zunahme des Druckverlustes arbeitet.

Von wesentlicher Bedeutung ist eine Dosiereinrichtung 6, die ein Biostatikum, im vorliegenden Fall eine Schwermetallverbindung, z.B. Kupferchlorid, vorzugsweise unter Zugabe eines Zinksalzes in das Wasser eindosiert. Die toxische Wirkung des Biostatikum unterbindet jegliche durch mikrobiellen Stoffwechsel bedingte Umsetzung des vom Mehrschichtfilter 2 abgehenden restlichen AOC.

Das Wasser passiert anschließend ein als Sicherheitsfilter fungierendes Kerzenfilter 7 und gelangt schließlich in eine Umkehrosmose-Anlage 8. Der hier abgetrennte TOC kann keine Schleimbildung hervorrufen, da das aus der Dosiereinrichtung 6 stammende Biostatikum jegliches bakterielle Wachstum toxisch hemmt.

Die Biofilmbildung der Umkehrosmose-Anlage 8 wird von einem Biofilm-Monitor 9 kontrolliert. Anhand der erfaßten Meßwerte wird die Dosierung des Biostatikum überwacht.

Die Eindosierung des Biostatikum erfolgt möglichst dicht hinter der Bioreaktionsstufe, bei Fortfall des Adsorbers also direkt hinter dem Mehrschichtfilter 2. Das Biostatikum stellt also einen Schutz für die gesamte anschließende Membranfilteranlage dar, einschließlich Zuleitung, Kerzenfilter, Meßeinrichtung u. dgl.

Wird beispielsweise die Bioreaktionsstufe mit einem Oberflächenwasser beschickt, dessen TOC-Konzentration 1,5 bis 3,0 mg/l beträgt, so führt die biosorptive TOC-Eliminierung im Bioreaktor zu einem substratgezehrten Wasser, dessen Keimzahl sich mit Werten zwischen 5 bis 50K/ml im Bereich der Trinkwasserqualität bewegt. Entsprechend gering ist die erforderliche Menge an Biostatikum, um die gewünschte stoffwechselhemmende Wirkung zum Schutze der Membran zu erzielen.

Zusammenfassend wird also dem Oberflächenwasser in der Bioreaktionsstufe ein Großteil der biologisch entfernbaren organischen Substanzen entzogen, woraufhin im auf diese Weise substratgezehrten Wasser in der nachfolgenden Konditionierungsstufe der mikrobielle Stoffwechsel durch Zudosieren eines nichtoxidierenden, biostatisch wirkenden Mittels gehemmt wird, bevor das Wasser schließlich der Membranfiltration, vorzugsweise einem Umkehrosmoseprozeß, unterworfen wird.

Im Rahmen der Erfindung sind durchaus Abwandlungsmöglichkeiten gegeben. So können mehrere Mehrschichtfilter parallel zueinander angeordnet sein. Auch kommen anders geartete Bioreaktoren in Frage, beispielsweise Aktivkohle-Filter oder Filtereinheiten mit strukturierten Kunststoffpellets als Trägermaterial. Die Dosiereinrichtung kann direkt hinter dem Bioreaktor, also stromauf des zusätzlichen Adsorbers angeordnet sein. Auch kann auf letzeren u.U. verzichtet werden. Gleiches gilt für die vorgeschaltete Flockungs- und Sedimentationseinrichtung. Anstelle der Umkehrosmose-Anlage sind andere Membranfilter einsetzbar. Die Wahl der Membran-Endbehandlung hängt ab von dem zu erzielenden Reinheitsgrad. Auch beschränkt sich die Anwendbarkeit der Erfindung nicht auf Fluß- oder Seewasser, sondern umfaßt auch die Reinigung von Meerwasser.

## Patentansprüche

1. Verfahren zum Erzeugen von Reinstwasser aus Rohwasser, das mit biologisch entfernbaren Substanzen, insbesondere mit gelösten organischen Kohlenwasserstoffverbindungene belastet ist, wobei
- das Wasser durch eine Bioreaktionsstufe geleitet wird,
- im auf diese Weise substratgezehrten Wasser in einer nachfolgenden Konditionierungsstufe der mikrobielle Stoffwechsel durch Zudosieren eines nicht-oxidierenden, biostatisch wirkenden Mittels gehemmt wird und
- das Wasser schließlich in einer Endbehandlungsstufe einer Membran-Filtration, insbesondere einem Umkehrosmoseprozeß, unterworfen wird.

2. Verfahren nach Anspruch 1, **dadurch gekennzeichnet, daß** die Membranfiltrationsstufe als Umkehrosmosestufe betrieben wird.

3. Verfahren nach Anspruch 1 oder 2, **dadurch gekennzeichnet, daß** dem Wasser in der biostatischen Konditionierungsstufe Schwermetallverbindungen, vorzugsweise Kupfer-und/oder Zinksalze zugegeben werden.

4. Verfahren nach Anspruch 3, **dadurch gekennzeichnet, daß** Kupfer- und Zinksalze gemeinsam zugegeben werden.

5. Verfahren nach einem der Ansprüche 1 bis 4, **dadurch gekennzeichnet, daß** zwischen der biostatischen Konditionierungsstufe und der Endbehandlungsstufe der biologische Stoffumsatz erfaßt und in Abhängigkeit hiervon die biostatische Konditionierungsstufe eingestellt wird.

6. Verfahren nach einem der Ansprüche 1 bis 5 **dadurch gekennzeichnet, daß** in der Bioreaktionsstufe eine Filtration durchgeführt wird.

7. Verfahren nach einem der Ansprüche 1 bis 6, **dadurch gekennzeichnet, daß** das Wasser nach der Bioreaktionsstufe und vor oder nach der biostatischen Konditionierungsstufe durch eine Adsorptionsstufe geführt wird.

8. Verfahren nach einem der Ansprüche 1 bis 7, **dadurch gekennzeichnet, daß** das Wasser vor der Bioreaktionsstufe durch eine Flockungs- und Sedimentationsstufe geführt wird.

9. Vorrichtung zum Durchführen des Verfahrens nach einem der Ansprüche 1 bis 8, nämlich zum Erzeugen von Reinstwasser aus Rohwasser, das mit biologisch entfernbaren Substanzen, insbesondere mit gelösten organischen Kohlenwasserstoffverbindungen belastet ist, mit
- einem Bioreaktor, insbesondere einem Mehrschichtfilter (2), das durch Rückspülung reinigbar ist,
- einer dem Bioreaktor nachgeschalteten Dosiereinrichtung (6) zum Eindosieren eines Biostatikum in das Wasser und
- einer der Dosiereinrichtung (6) nachgeschalteten Membran-Filteranlage, vorzugsweise einer Umkehrosmose-Anlage (8).

10. Vorrichtung nach Anspruch 9, **dadurch gekennzeichnet, daß** der Bioreaktor fremdbelüftet ist.

11. Vorrichtung nach Anspruch 9 oder 10, **dadurch gekennzeichnet, daß** der Membran-Filteranlage ein den Verkeimungsgrad erfassendes Meßsystem vorgeschaltet ist, das die Einstellung der Dosiereinrichtung (6) bestimmt.

12. Vorrichtung nach Anspruch 11, **dadurch gekennzeichnet, daß** das Meßsystem eine Keimzahl-Meßeinrichtung aufweist.

13. Vorrichtung nach einem der Ansprüche 9 bis 12, **dadurch gekennzeichnet, daß** ein als Biofilm-Monitor (9) vorgesehen ist.

14. Vorrichtung nach einem der Ansprüche 9 bis 13, **dadurch gekennzeichnet, daß** dem Bioreaktor eine AOC-Messung nachgeschaltet ist, die die Zyklen für die Rückspülung des Bioreaktors (2) bestimmt.

15. Vorrichtung nach einem der Ansprüche 9 bis 14, **dadurch gekennzeichnet, daß** stromab des Bioreaktors ein Adsorber (5) vorgesehen ist.

16. Vorrichtung nach einem der Ansprüche 9 bis 15, **dadurch gekennzeichnet, daß** dem Bioreaktor eine Flockungs- und Sedimentationseinrichtung (1) vorgeschaltet ist.

## Claims

1. Method of producing highly pure water from untreated water loaded with biologically removable substances, particularly with dissolved organic hydrocarbons, wherein the water is conducted through a bioreaction stage, in this manner substrate-diminished water is locked in a downstream conditioning stage of microbial metabolism by admetering of a non-oxidising, biostatically acting agent and the water is finally subjected in a final treatment stage to a membrane filtration, particularly

2. Method according to claim 1, **characterised in that** the membrane filtration stage is operated as a reverse osmosis stage.

3. Method according to claim 1 or 2, **characterised in that** heavy metal compounds, preferably copper salts and/or zinc salts, are added to the water in the biostatic conditioning stage.

4. Method according to claim 3, **characterised in that** copper salts and zinc salts are added conjointly.

5. Method according to one of claims 1 to 4, **characterised in that** the biological material conversion is detected between the biostatic conditioning stage and the final treatment stage and the biostatic conditioning stage is adjusted in dependence thereon.

6. Method according to one of claims 1 to 5, **characterised in that** a filtration is carried out in the bioreaction stage.

7. Method according to one of claims 1 to 6, **characterised in that** the water is conducted through an adsorption stage after the bioreaction stage and before or after the biostatic conditioning stage.

8. Method according to one of claims 1 to 7, **characterised in that** the water is taken through a flocculation and sedimentation stage before the bioreaction stage.

9. Device for carrying out the method according to one of claims 1 to 8, in particular for producing highly pure water from untreated water loaded with biologically removable substances, particularly with dissolved organic hydrocarbons, comprising a bioreactor, especially a multi-layer filter (2), which can be cleaned by backwashing, an admetering device (6) downstream of the bioreactor for admetering a biostatic means to the water and a membrane filter installation, preferably a reverse osmosis installation (8), downstream of the admetering device (6).

10. Device according to claim 9, **characterised in that** the bioreactor is externally aerated.

11. Device according to claim 9 or 10, **characterised in that** a measuring system which detects the degree of bacterial growth and determines the setting of the admetering device (6), is disposed upstream of the membrane filter installation.

12. Device according to claim 11, **characterised in that** the measuring system comprises a bacteria-count measuring device.

13. Device according to one of claims 9 to 12, **characterised in that** a [as] biofilm monitor (9) is provided.

14. Device according to one of claims 9 to 13, **characterised in that** an assimilatable organic carbon measuring means determining the cycles for backwashing of the bioreactor (2) is arranged downstream of the bioreactor.

15. Device according to one of claims 9 to 14, **characterised in that** an adsorber (5) is provided downstream of the bioreactor.

16. Device according to one of claims 9 to 15, **characterised in that** a flocculation and sedimentation device (1) is arranged upstream of the bioreactor.

## Revendications

1. Procédé pour produire de l'eau pure à partir d'eau brute, qui est chargée de substances pouvant être éliminées biologiquement, en particulier de composés d'hydrocarbures organiques dissous, où
- l'eau est amenée à passer à travers un étage de bioréaction,
- dans l'eau diminuée en substrat de cette manière, dans un étage de conditionnement suivant, le métabolisme microbien est bloqué par un ajout dosé d'un produit non oxydant, à effet biostatique et
- l'eau est enfin soumise dans un étage de traitement final à une filtration à membrane, en particulier à un processus d'osmose inverse.

2. Procédé selon la revendication 1, **caractérisé en ce que** l'étage de filtration à membrane est amené à fonctionner comme étage d'osmose inverse.

3. Procédé selon la revendication 1 ou 2, **caractérisé en ce qu'**on ajoute à l'eau à l'étage de conditionnement biostatique des composés de métaux lourds, de préférence des sels de cuivre et/ou de zinc.

4. Procédé selon la revendication 3, **caractérisé en ce que** les sels de cuivre et de zinc sont ajoutés ensemble.

5. Procédé selon l'une des revendications 1 à 4, **caractérisé en ce que**, entre l'étage de conditionnement biostatique et l'étage de traitement final, la conversion biologique de matière est détectée et, en fonction de celle-ci, l'étage de conditionnement biostatique est réglé.

6. Procédé selon l'une des revendications 1 à 5, **caractérisé en ce que** dans l'étage de bioréaction, une filtration est effectuée.

7. Procédé selon l'une des revendications 1 à 6, **caractérisé en ce que** l'eau, après l'étage de bioréaction et avant ou après l'étage de conditionnement biostatique, est amenée à passer à travers un étage d'adsorption.

8. Procédé selon l'une des revendications 1 à 7, **caractérisé en ce que** l'eau est amenée à passer avant l'étage de bioréaction à travers un étage de floculation et de sédimentation.

9. Dispositif pour l'exécution du procédé selon l'une des revendications 1 à 8, à savoir pour produire de l'eau pure à partir d'eau brute, qui est chargée de substances pouvant être éliminées biologiquement, en particulier de composés d'hydrocarbures organiques dissous, avec
- un bioréacteur, en particulier un filtre multicouches (2), qui peut être nettoyé par rétrolavage,
- une installation de dosage (6) disposée en aval du bioréacteur pour l'ajout dosé d'un biostatique dans l'eau et
- une installation de filtration à membrane disposée en aval de l'installation de dosage (6), de préférence d'une installation à osmose inverse (8).

10. Dispositif selon la revendication 9, **caractérisé en ce que** le bioréacteur est à ventilation forcée.

11. Dispositif selon la revendication 9 ou 10, **caractérisé en ce qu'**il est disposé en amont de l'installation de filtration à membrane un système de mesure détectant le degré de formation de germes, qui détermine le réglage de l'installation de dosage (6).

12. Dispositif selon la revendication 11, **caractérisé en ce que** le système de mesure présente une installation de mesure du nombre de germes.

13. Dispositif selon l'une des revendications 9 à 12, **caractérisé en ce qu'**il est prévu un moniteur de biofilm (9).

14. Dispositif selon l'une des revendications 9 à 13, **caractérisé en ce qu'**il est disposé en aval du bioréacteur une mesure AOC qui détermine les cycles pour le rétrolavage du bioréacteur (2).

15. Dispositif selon l'une des revendications 9 à 14, **caractérisé en ce qu'**il est prévu en aval du bioréacteur un adsorber (5).

16. Dispositif selon l'une des revendications 9 à 15, **caractérisé en ce qu'**il est disposé en amont du bioréacteur une installation de floculation et de sédimentation (1).
